# EUROPEAN PATENT APPLICATION

(11) **EP 3 439 127 A1**
(43) Date of publication of application: **06.02.2019**
(21) Application number: 17184949.0
(22) Date of filing: 04.08.2017
(51) Int. Cl.: H02H 1/00

(54) **ELECTRONIC PROTECTION DEVICE**

(71) Applicant: ABB Schweiz AG, 5400 Baden (CH)
(72) Inventor: Butti, Agostino, I-20010 Vittuone (MI) (IT); Currà, Antonio, I-20081 Abbiategrasso (MI) (IT); Ghezzi, Luca, I-21013 Gallarate (VA) (IT); Cozzi, Vittorio, I-20010 Vittuone (MI) (IT)
(74) Representative: De Bortoli, Eros

(57) **Abstract**

An electronic protection device (1) for a LV electric line (100), said protection device being provided with a control unit (2) having a controller (3) comprising a central processing unit (30) and an arc fault determination module (4) executable by said central processing unit and configured to implement arc detection functions (F1) to determine the presence of arc fault conditions in said electric line.

The arc fault determination module is configured to process one or more input values (D₁, D₂, D_{N}) indicative of operating conditions of said electric line to implement said arc detection functions (F1).

The controller comprises a data acquisition arrangement (6) adapted to manage acquisition and storage of said input values (D₁, D₂, D_{N}).

## Description

The present invention relates to an electronic protection device for low voltage (LV) electric lines.

As is known, typically, electronic protection devices for LV electric lines are operatively associated to electric power distribution grids to provide protection and monitoring functionalities to electric lines.

An electronic protection device normally comprises a control unit having a controller (e.g. a microcontroller) including data processing resources, e.g. a CPU capable of executing stored software instructions, peripheral modules and I/O ports.

Normally, such a controller comprises data processing arrangements to receive detection signals indicative of the operating conditions of the electric line and determine, depending on said detection signals, whether fault conditions (e.g. ground fault conditions, over-voltage conditions, over-current conditions, arc fault conditions and the like) are present.

Among the above-mentioned possible fault conditions of an electric line, arc fault conditions are of relevant interest as arcing phenomena may rapidly lead to fire or burning events with consequent relevant issues in terms of safety.

For this reason, in many electronic protection devices of the state of the art, the controller is configured to carry out arc detection functions to determine the presence of arc fault conditions along an electric line operatively associated therewith.

In these devices, the controller acquires and processes input values indicative of the operating conditions of the electric line.

Normally, the controller processes said input values within the sampling period (e.g. 50 µs) in which they are acquired to avoid data corruption and to simplify the design of algorithms to process said input values.

This fact often poses relevant problems in managing operation of the controller as this latter has normally to execute concurrently and in real time, within said sampling period, the specific processing tasks related to the implementation of said arc detection functions and a number of additional multiple tasks, e.g. driving peripheral components, checking electronic components of the control unit, further data processing and the like.

The above issue is rendered even more critical by the circumstance that the processing load required by the specific processing tasks related to the implementation of said arc detection functions is normally variable from a sampling period to another as it depends on the actual nature of the acquired input data (in other words on the on-going operating conditions of the electric line).

In order to effectively deal with these problems, it would be desirable to adopt a controller having sufficiently powerful data processing capabilities. However, this solution leads to a remarkable increase of the overall production costs of the electronic protection device, which are often unacceptable from the industrial point of view.

Another possible solution would be the adoption of a relatively long sampling period by the controller. However, such an approach entails a relevant worsening of the overall performances of the electronic protection device, which may even lead to failures in detecting arc fault conditions in the electric line.

Further widely adopted solutions to overcome the problems described above provide for implementing an apportioning of the tasks to be performed and executing the task portions so obtained at different sampling periods.

Even if they have often proven to be quite effective in managing operation of the controller, these solutions are normally of difficult and time-expensive industrial implementation, as they require tight constraints in designing the firmware and the execution timing of the data processing modules of the controller to avoid data corruption and ensure a reliable determination of possible arc fault conditions in the electric line.

In order to solve these above-mentioned issues a controller provided with a real time operating system (RTOS) may be adopted. However, this solution entails a relevant increase of the industrial costs for the electronic protection device.

In the state of the art, it is thus still quite felt the need for innovative electronic protection devices employing arrangements to manage operation of the controller included in the control unit, which are relatively easy and inexpensive to arrange and produce at industrial level and which, at the same time, ensure high levels of performances for said electronic protection devices, especially in carrying out arc detection functions.

In order to respond to this need, the present invention provides an electronic protection device according to the following claim 1 and the related dependent claims.

In a general definition, the present invention relates to an electronic protection device for a low voltage electric line, which is provided with a control unit having a controller comprising a central processing unit.

The controller comprises an arc fault determination module executable by said central processing unit and configured to implement arc detection functions to determine the presence of arc fault conditions in said electric line.

Such arc fault determination module is configured to process one or more input values indicative of operating conditions of said electric line to implement said arc detection functions.

According to the invention, the controller comprises a data acquisition arrangement adapted to manage acquisition and storage of said input values.

The data acquisition arrangement comprises:
- a memory comprising one or more circular memory buffers for temporary storing said input values;
- a first data acquisition module configured to provide a first interrupt signal at subsequent time instants separated by a fixed time period;
- a second data acquisition module configured to acquire and process one or more detection signals indicative of operating conditions of said electric line to obtain said input values, said second data acquisition module being configured to provide a second interrupt signal when the obtaining of a set of said input values is completed;
- a third data acquisition module executable by said central processing unit and activatable by said first interrupt signal, said third data acquisition module being configured to enable operation of said second data acquisition module in response to said first interrupt signal;
- a fourth data acquisition module executable by said central processing unit and activatable by said second interrupt signal, said fourth data acquisition module being configured to acquire a set of input values from said second data acquisition module and store each acquired input value in a corresponding memory buffer of said buffer memory in response to said second interrupt signal.

Further characteristics and advantages of the invention will become apparent from the detailed description of exemplary embodiments of the electronic protection device, which is illustrated only by way of non-limitative examples in the accompanying drawings, wherein:

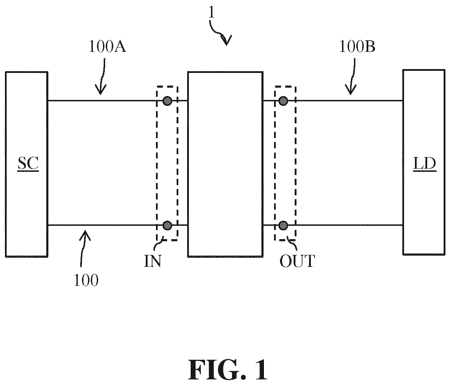

Figure 1 is a block diagram of a LV electric line to which an electronic protection device, according to the invention, is operatively associated;
Figures 2-4 schematically show some embodiments of the electronic protection device, according to the invention;
Figure 5 schematically shows some data processing modules of the controller included in the control unit of the electronic protection devices of Figures 2-4;
Figure 6-10 schematically show the operation of the data processing modules of Figure 5.

With reference to the cited figures, the present invention relates to an electronic protection device 1, which, in operation, is associated to a low-voltage electric line 100.

For the purposes of the present application, the term "low voltage" (LV) relates to operating voltages lower than 1 kV AC and 1.5 kV DC.

The electric line 100 comprises one or more phase conductors P and, preferably, a neutral conductor N.

Preferably, the electric line 100 comprises a single-phase conductor P and a neutral conductor N.

However, as the skilled person will certainly understand, the electric line 100 may have different arrangements for its own conductors, according to the needs.

The electric line 100 is intended to electrically connect an electric power source SC and an electric load LD, which may be of any type.

In operation, the electronic protection device 1 is arranged between the electric power source SC and the electric load LD, more precisely between upstream portions 100A and downstream portions 100B of the electric line 100, which are electrically connected with the electric power source SC and the electric load LD, respectively.

Conveniently, the electronic protection device 1 comprises an outer casing (not shown), preferably made of electrically insulating material, which defines an internal volume to accommodate the components of said electronic protection device.

The electronic protection device 1 comprises a control unit 2, which conveniently comprises a controller 3, e.g. a microcontroller.

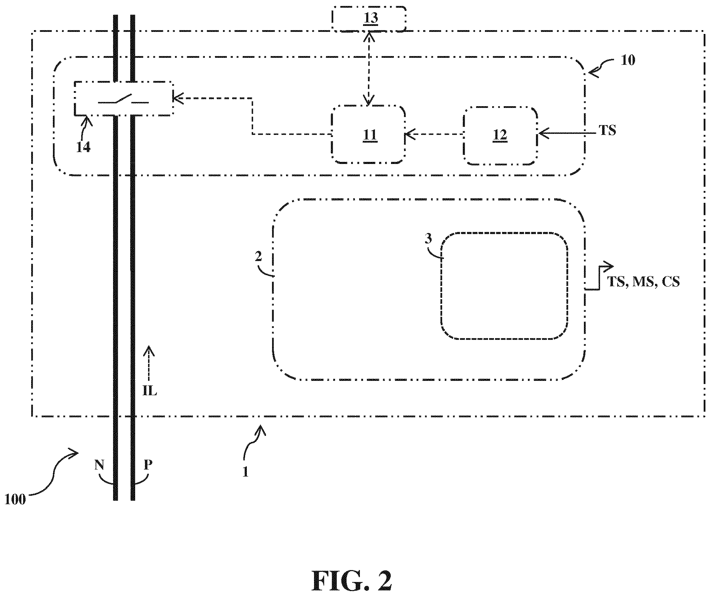

According to some embodiments of the invention (figure 2), the electronic protection device 1 is in itself adapted to interrupt the flow of a line current IL along the electric line 100.

In this case, according to some configurations (typically dedicated to the North American market), the electronic protection device 1 can take three different operative states, namely a closed state, a tripped state and an open state, during its operating life.

Alternatively, according to other configurations (typically dedicated to the European or other international markets), the electronic protection device 1 can take two different operative states, namely a closed state and an open state, during its operating life.

When it operates in a closed state, the electronic protection device 1 allows a current IL to flow along the electric line 100 between the upstream and downstream portions 100A, 100B of this latter.

When it operates in a tripped state or open state, the electronic protection device 1 interrupts the current IL along the electric line 100, thereby electrically disconnecting the upstream and downstream portions 100A, 100B of this latter.

According to these embodiments of the invention, the electronic protection device 1 comprises one or more pairs of electric contacts 14, each including a mobile contact and a fixed contact.

Each pair of electric contacts 14 is intended to be electrically connected to a corresponding conductor of the electric line 100 and, in operation, can be mutually coupled or separated.

When the electric contacts 14 are mutually coupled, the protection device 1 is in a closed state and an electric current IL can flow along the corresponding conductor of the electric line 100. When the electric contacts 14 are decoupled, the protection device 1 is in a tripped state or open state and an electric current IL is prevented from flowing along the corresponding conductor of the electric line 100.

The electric contacts 14 and their electrical connection with the corresponding conductors of the electric line 100 may be realized in known manners that will not here described in more details for the sake of brevity.

The electronic protection device 1 further comprises an operating mechanism 11 operatively coupled with the electric contacts 14 (in particular with the mobile contacts thereof) and mechanically interacting with these latter.

The electronic protection device 1 further comprises a tripping unit 12 (e.g. an electromagnetic actuator) adapted to mechanically actuate the operating mechanism 11.

In operation, in response to receiving a trip signal TS, the tripping unit 12 actuates the operating mechanism 11 to decouple the electric contacts 14, thereby carrying out a tripping manoeuver of the electronic protection device.

The electronic protection device 1 additionally comprises a handle 13 operatively coupled with the operating mechanism 11 and mechanically interacting with this latter.

The handle 13 is movable between two or three operating positions depending on the configuration of the electronic protection device.

The handle 13 may be actuated by the operating mechanism 11, by a user or by external equipment during a tripping or opening maneuver of the electronic protection device.

On turn, the handle 13 may actuate the operating mechanism 11 to couple or decouple or maintain decoupled (depending on the configuration of the electronic protection device) the electric contacts 14 during an opening manoeuver or a closing maneuver of the electronic protection device.

As it is evident from the above, in the above-mentioned embodiments of the invention, the electric contacts 14, the operating mechanism 11, the tripping unit 12 and the handle 13 form a relay 10 adapted to interrupt the flow of a line current IL along the electric line 100.

The electric contacts 14, the operating mechanism 11, the tripping unit 12 and the handle 13 may be of known type and will not here described in more details for the sake of brevity. According to the above-mentioned embodiments of the invention, the control unit 2 is conveniently adapted to provide trip signals TS to activate the tripping unit 12 when fault conditions requiring a tripping manoeuvre of the electronic protection device are determined. The control unit 2 may however be adapted to carry out signalling functionalities such as providing command signals CS to activate suitable signalling means when fault conditions are determined and/or monitoring functionalities such as providing (e.g. to a remote control device) monitoring signals MS indicative of the operative status of the electric line 100 and/or the electronic protection device 1 itself.

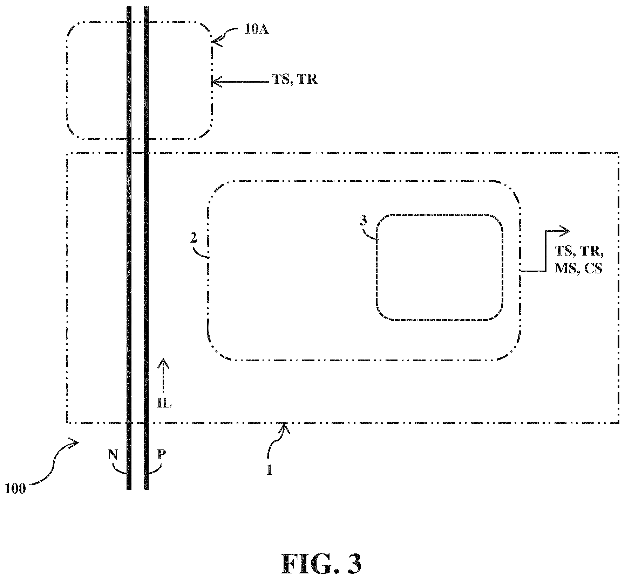

According to other embodiments of the invention (figure 3), the electronic protection device 1 is operatively associated to a relay 10A adapted to interrupt the flow of a line current IL along the electric line 100.

The relay 10A may be of known type and will not here described in more details for the sake of brevity.

In this case, the control unit 2 is conveniently adapted to provide trip signals TS or a mechanical force TR to activate the relay 10A when fault conditions, which require an interruption of the electric line 100, are determined.

When it provides a mechanical force TR to trip the relay 10A, the control unit 2 conveniently includes an electromechanical arrangement (not shown) operatively coupled to the relay 10A. Such an electromechanical arrangement (which may be of known type) is activated by suitable control signals generated by the controller 3 when fault conditions are determined and it provides the mechanical force TR in response to said control signals.

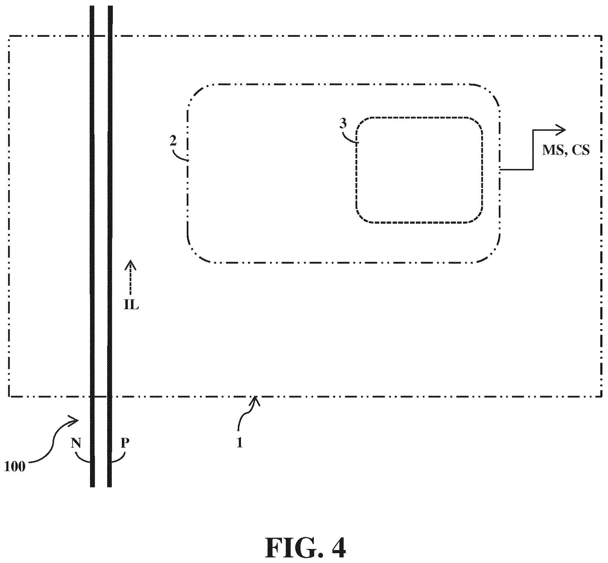

The control unit 2 may however be adapted to carry out signalling functionalities such as providing command signals CS to activate suitable signalling means (not shown - they may be of known type) when fault conditions are determined and/or monitoring functionalities such as providing (e.g. to a remote control device) monitoring signals MS indicative of the operative status of the electric line 100 and/or the electronic protection device 1 itself. According to further embodiments of the invention (figure 4), the electronic protection device 1 is basically adapted to monitor the operative status of the electric line 100.

In this case, the control unit 2 is conveniently adapted to provide (e.g. to a remote control device) monitoring signals MS indicative of the operative status of the electric line 100 and/or the electronic protection device 1 itself.

The control unit 2 may however be adapted to carry out signalling functionalities such as providing command signals CS to activate suitable signalling means (not shown - they may be of known type) when fault conditions are determined.

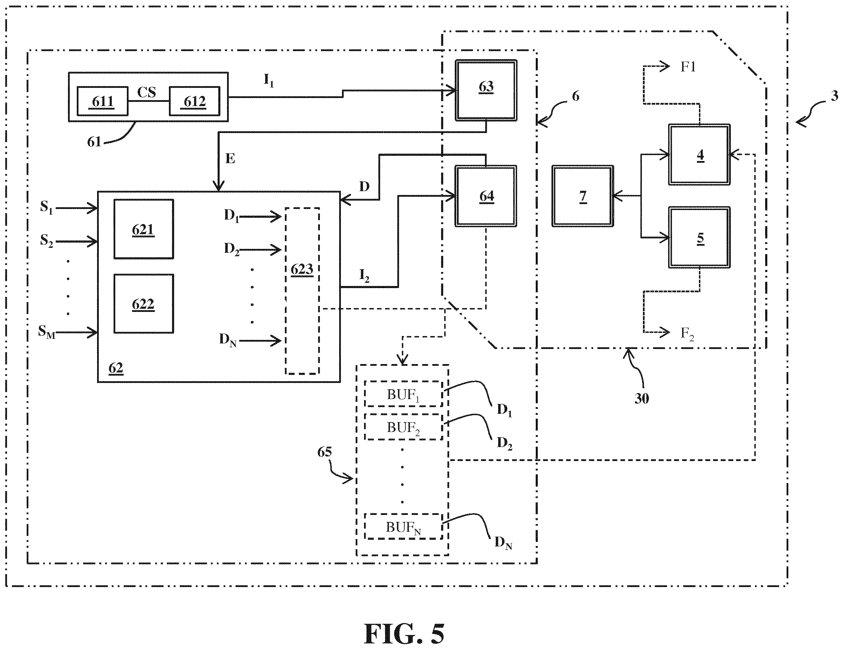

In general, the controller 3 of the control unit 2 includes data processing resources of digital type to carry out its functionalities, namely a central processing unit (CPU) 30 capable of executing software instructions stored in a medium, peripheral components, I/O ports, memories and the like. As an example, as it will better emerge from the following, the controller 3 conveniently comprises data processing modules 4, 5, 7, 63, 64 formed by software components executable by the CPU 30, data processing modules 61, 62 formed by peripherals components of the controller 3 and the memories 65, 623 (figure 5).

According to the invention, the controller 3 of the control unit 2 comprises an arc fault determination module 4 executable by the CPU 30 and configured to execute arc detection functions F1 to determine the presence of arc fault conditions in the electric line 100 (figure 5).

The arc fault determination module 4 is configured to process one or more input values D₁, D₂, D_{N} indicative of the operating conditions of the electric line 100 to carry out the arc detection functions F1.

The arc detection functions F1 may include real time detection algorithms to determine the possible presence of arc fault conditions in the electric line 100 basing on the behavior of some electric quantities (e.g. line currents and voltages) of the electric line 100.

In general, however, the arc fault detection functions F1 may be of known type and will not here described in more details for the sake of brevity.

Preferably, the controller 3 of the control unit 2 comprises one or more additional data processing modules 5 executable by the CPU 30 and configured to carry out further functions F2 to control the operation of the electronic protection device.
Said further functions F2 may be of any type, according to the needs.

As an example, they may include further fault detection functions to determine the presence of fault conditions in the electric line 100 (e.g. overvoltage detection functions for the execution of which input values indicative of the voltages of the electric line 100 are processed by the modules 5), signalling functions, functions directed to check the operating conditions of specific components of the controller 3, functions directed to manage operation of specific components of the controller 3, and the like.

In general, however, the above-mentioned further functions F2 may be of known type and will not here described in more details for the sake of brevity.

Preferably, the controller 3 of the control unit 2 comprises a managing module 7 executable by the CPU 30 and adapted to manage operation of the arc fault determination module 4 and the additional data processing modules 5.

The managing module 7 is conveniently configured to schedule in time the operation of the arc fault determination module 4 and the additional data processing modules 5 and activate them at suitable activation instants according to the operating conditions of the controller 3. According to the invention, the controller 3 comprises a data acquisition arrangement 6 adapted to manage the acquisition and storage of the input values D₁, D₂, D_{N} to be processed by the arc fault determination module 4 to execute the above-mentioned arc detection functions F1.

The data acquisition arrangement 6 includes a number of modules, each comprising suitable data processing resources (e.g. software components executable by the CPU 30 and/or other data processing components of the controller and/or memories), to carry out its functionalities.

The data acquisition arrangement 6 comprises a memory 65 including one or more circular memory buffers BUF₁, BUF₂, BUF_{N} for temporary storing the input values D₁, D₂, D_{N} to be processed by the arc fault determination module 4.

For the sake of clarity, it is specified that, within the scope of the present invention, the term "circular memory buffer" identifies a memory structure including a number of memory locations MBL adapted to store information according to a circular sequence.

Preferably, the memory buffers BUF₁, BUF₂, BUF_{N} have a predefined length L and include a plurality of over-writable memory locations MBL storing information implementing a circular FIFO queue.

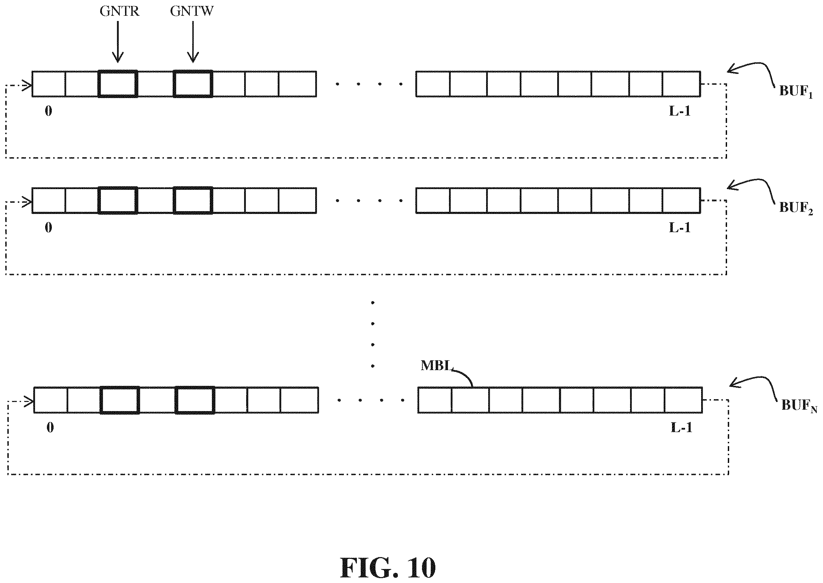

As an example (figure 10), starting from a situation in which memory buffers BUF₁, BUF₂, BUF_{N} are void, information is stored sequentially (i.e. at subsequent storing instants) in each memory buffer starting the memory location "0", which is assumed as the first memory location to be written. When also the last memory location "L-1" is written, the memory buffers BUF₁, BUF₂, BUF_{N} are full. Following information will be stored by over-writing the memory locations of the memory buffer BUF₁, BUF₂, BUF_{N}, starting again from the memory location "0".

Conveniently, as shown in the cited figures, the number of memory buffers BUF₁, BUF₂, BUF_{N} of the memory 65 corresponds to the number of different input values D₁, D₂, D_{N} to be processed by the arc fault determination module 4. In this way, each memory buffer BUF₁, BUF₂, BUF_{N} can store a number L of different samples (stored in different memory locations at different storing instants) of a corresponding input value D₁, D₂, D_{N}.

The data acquisition arrangement 6 comprises a first data acquisition module 61 providing a first interrupt signal I₁ at subsequent time instants t₁, t₂, t_{I} separated by a fixed period of time Ts.

Preferably, the first data acquisition module 61 comprises a clock component 611, e.g. a DCO (Digitally Controlled Oscillator), which provides in output a clock signal CS. Such a clock signal is received and processed by a timing circuit 612 operatively coupled with the clock component 611. Basing on the clock signal CS, the timing circuit 61 provides the interrupt signal I₁ at the subsequent time instants t₁, t₂, t_{I}.

Preferably, the fixed time period Ts is the sampling period (e.g. 50 µs) adopted by the controller 3 in operation.

The data acquisition arrangement 6 comprises a second data acquisition module 62, which, in operation, acquires and processes one or more detection signals S₁, S₂, S_{M} indicative of the operating conditions of the electric line 100 to obtain the input values D₁, D₂, D_{N} to be processed by the arc fault determination module 4.

Conveniently, the detection signals S₁, S₂, S_{M} are indicative of the behavior of given electric quantities of the electric line 100, e.g. line currents or voltages.

Preferably, the detection signals S₁, S₂, S_{M} are provided by one or more detection arrangements (not shown) of the control unit 2, which may be operatively associated with the conductors of the electric line 100.

In general, said detection arrangements may be of known type and will not here described in more details for the sake of brevity.

Preferably, the second data acquisition module 62 comprises an A/D conversion component 621 to execute an A/D conversion of one or more detection signals S₁, S₂ received in input by the second data acquisition module 62.

As an example, the detection signals S₁, S₂ to be converted may be line current or line voltage detection signals obtained as analog signals and intended to be processed as digital signals. Conveniently, the A/D conversion component 621 provides in output one or more sequences of input values D₁, D₂ indicative of the digitally converted detection signals S₁, S₂ received in input.

In a practical implementation of the invention, the A/D conversion component 621 may be formed by a suitable peripheral component of the controller 3.

The second data acquisition module 62 preferably comprises one or more further signal processing components 622 configured to process one or more detection signals S_{N} received in input by the second data acquisition module 62.

As an example, the second data acquisition module 62 may comprise a counting component 622 configured to count level transitions of one or more detection signals S_{N} and providing in output one or more sequences of input values D_{N} indicative of the counted level transitions. In a practical implementation of the invention, the further conversion components 622 may be formed by suitable peripheral components of the controller 3.

Preferably, a number of detection signals S₁, S₂, S_{N} included in the detection signals S₁, S₂, S_{M} (M >= N) received in input is selected and processed at each sampling period Ts by the second data acquisition module 62 (in particular by the components 621, 622 thereof) upon receiving a suitable enabling signal E.

Conveniently, the number N of detection signals S₁, S₂, S_{N} selected and processed at each sampling period Ts by the second data acquisition module 62 corresponds to the number of input values D₁, D₂, D_{N} to be processed by the arc fault determination module 4.

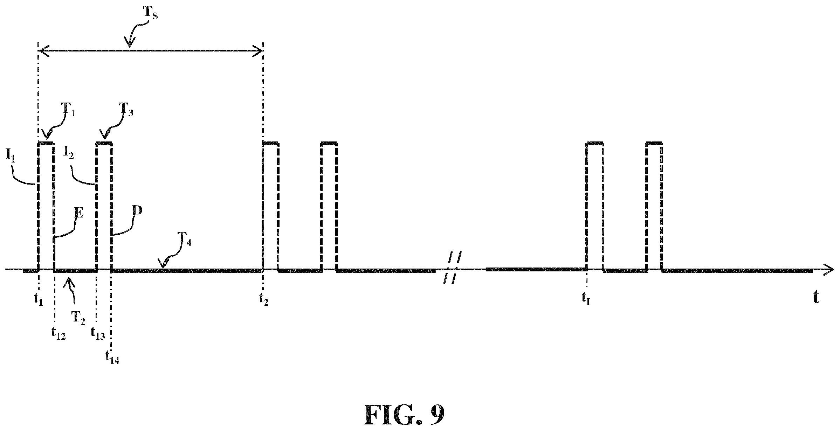

As it is possible to observe from figure 9, the second data acquisition module 62 employs a given processing time T₂ (instants t₁₂, t₁₃) to carry out its functionalities, which is very shorter than the sampling period Ts (e.g. T₂ ≈ 10 µs). During such a time interval, other data processing resources of the controller 3 (e.g. the data processing modules 4, 5, 7) may enter into a stand-by mode or may operate according to the needs.

Preferably, the second data acquisition module 62 comprises a memory component 623 in which the second data acquisition module 62 (in particular the components 621, 622 thereof) stores the acquired input values D₁, D₂, D_{N}.

Preferably, the memory component 623 include a number N of over-writable memory locations corresponding to the number of input values D₁, D₂, D_{N} to be processed by the arc fault determination module 4.

In a practical implementation of the invention, the memory component 623 may be formed by suitable memory registers of the controller 3, the memory locations of which are conveniently overwritten in parallel at each sampling period Ts to store the corresponding acquired input values D₁, D₂, D_{N}.

An important feature of the second data acquisition module 62 consists in that it is provides a second interrupt signal I₂ (instant t₁₃ of figure 9) when the obtaining of a set of N input values D₁, D₂, D_{N} is completed, for example stored in the memory component 623. Such an interrupt signal triggers the storage of the input values D₁, D₂, D_{N} obtained by the second data acquisition module 62 into the circular memory buffers BUF₁, BUF₂, BUF_{N}, as it will better emerge from the following.

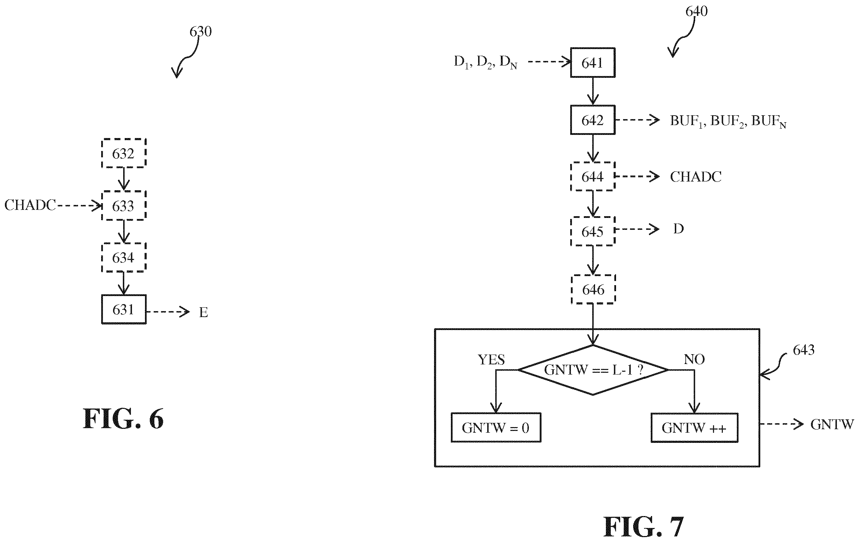

The data acquisition arrangement 6 comprises a third data acquisition module 63, executable by the CPU 30, which, in operation, is activated by the first interrupt signal I₁ and enables operation of the second data acquisition module 22 in response to the first interrupt signal I₁. Preferably, the third data acquisition module 63 (which may be for example an Interrupt Service Routine - ISR) is configured to execute a first data processing procedure 630 to carry out its functionalities (figure 6).

Preferably, the processing procedure 630 comprises a step 631 of enabling the second data acquisition module 62 to acquire one or more detection signals S₁, S₂, S_{M} and obtain the above-mentioned input values D₁, D₂, D_{N} by processing the acquired detection signals. Preferably, the third data acquisition module 63 provides an enabling signal E (instant t₁₂ of figure 9) to the second data acquisition module 62 to enable this latter to operate.

In response to the enabling signal E, the second data acquisition module 62 selects and processes a number N of detection signals S₁, S₂, S_{N} to obtain a set of input values D₁, D₂, D_{N} storable in the memory component 623.

Preferably, the processing procedure 630 comprises a step 632 of setting the first data acquisition module 61, for instance to configure it for providing a further interrupt signal I₁ after one more sampling period Ts has passed.

In a preferred variant, if the first interrupt signal I₁ has been received, the processing procedure 630 provides for some steps directed to select one or more detection signals S₁, S₂, S_{N} to be acquired by the second data acquisition module 62 (more particularly by the A/D conversion component 621) for obtaining the input values D₁, D₂, D_{N}.

Preferably, the processing procedure 630 comprises a step of checking 633 one or more selection variables CHADC indicative of one or more selectable detection signals S₁, S₂ that can be acquired by the second data acquisition module 62, more preferably by the A/D conversion component 621.

Conveniently, each selection variable CHADC takes logic values indicative of whether a corresponding selectable detection signals S₁, S₂ has to be acquired or not by the second data acquisition module 62, more preferably by the A/D conversion component 621.

Preferably, the processing procedure 630 comprises a step of selecting 634 one or more detection signals S₁, S₂, S_{N} to be acquired by the second data acquisition module 62 (more preferably by the A/D conversion component 621) depending on the selection variables CHADC.

Conveniently, these above illustrated steps 632, 633, 634 are carried out before enabling (step 631) the second data acquisition module 62 to operate. In this way, the enabling signal E may conveniently comprise selection information allowing the second data acquisition module 62 (in particular the A/D conversion module 621) to properly select the correct detection signals S₁, S₂, S_{N} to obtain the desired input data D₁, D₂, D_{N}.

As it is possible to observe from figure 9, the third data acquisition module 63 employs a given processing time T₁ (instants t₁, t₁₂ of figure 9) to carry out its functionalities, which is much shorter than the sampling period Ts (e.g. T₂ ≈ 1-2 µs). During such a time interval, the data processing module 63 has a higher processing priority with respect to other data processing resources of the controller 3 (e.g. the data processing modules 4, 5, 7) due to the receipt of an interrupt signal. These latter data processing resources conveniently enter into stand-by mode until the execution of data processing module 63 has finished.

The data acquisition arrangement 6 comprises a fourth data acquisition module 64 executable by the CPU 30 and activated by the second interrupt signal I₂ provided by the second data acquisition module 62, when a set of input values D₁, D₂, D_{N} is obtained by this latter at a given sampling period Ts.

In response to the second interrupt signal I₂, the fourth data acquisition module 64 acquires a set of input values D₁, D₂, D_{N} from the second data acquisition module 62 and stores each acquired input value D₁, D₂, D_{N} in a corresponding memory buffer BUF₁, BUF₂, BUF_{N} of the buffer memory 65.

Preferably, the fourth data acquisition module 64 (which may be for example an Interrupt Service Routine - ISR) is configured to execute a second data processing procedure 640 to carry out its functionalities (figure 7).

Preferably, the processing procedure 640 comprises a step of acquiring 641 a set of input values D₁, D₂, D_{N} from the second data acquisition module 62, preferably from the memory component 623 of this latter.

The processing procedure 640 then comprises a step 642 of storing each acquired input value D₁, D₂, D_{N} in a corresponding memory buffer BUF₁, BUF₂, BUF_{N} at a memory location pointed by a first index variable GNTW.

Conveniently, when necessary, input values D₁, D₂, D_{N} may be processed (e.g. to calculate scaled values) before being stored.

The first index variable GNTW is a variable pointing to the memory locations of the memory buffers BUF₁, BUF₂, BUF_{N} in which the input values D₁, D₂, D_{N} have to be stored at a given sampling period Ts.

The processing procedure 640 then comprises a step 643 of updating the first index variable GNTW in such a way this latter points to new subsequent memory locations of the memory buffers BUF₁, BUF₂, BUF_{N}, in which the next input values D₁, D₂, D_{N} (acquired at the next sampling period) have to be stored.

Preferably, the step 643 comprises the sub-step of comparing the first index variable GNTW with a predetermined index value L indicative of a maximum number of memory locations of the memory buffers BUF₁, BUF₂, BUF_{N}. In practice, the first index variable GNTW is compared with a predetermined index value L indicative of the length of the memory buffers BUF₁, BUF₂, BUF_{N}.

Preferably, the step 643 comprises the sub-step of setting the first index variable GNTW in the updating condition: {GNTW=0}, if the condition {GNTW=L-1} is true.

Preferably, the step 643 comprises the sub-step of setting the first index variable GNTW in the updating condition; {GNTW=GNTW+1}, if the condition {GNTW=L-1} is false.

In other words, in the step 643, if the first index variable GNTW currently points to the last memory location "L-1" of the memory buffers BUF₁, BUF₂, BUF_{N}, such a first index variable is updated in such a way to point to the first memory location "0" of the memory buffers BUF₁, BUF₂, BUF_{N}, thereby implementing a circular FIFO queue.

Otherwise, if the first index variable GNTW currently points to a memory location different from the last memory location "L-1" of the memory buffers BUF₁, BUF₂, BUF_{N}, such a first index variable is updated in such a way to point to the following memory location of the memory buffers BUF₁, BUF₂, BUF_{N} (as required by a FIFO queue).

In a preferred variant, the processing procedure 640 comprises the step 644 of updating the selection variables CHADC, which are indicative of one or more selectable detection signals S₁, S₂ to be acquired by the second data acquisition module 62.

Conveniently, the updating of the selection variables CHADC may be carried out basing on the input values D₁, D₂, D_{N} and/or control variables provided by the controller 3.

In a preferred variant, the processing procedure 640 comprises the step 645 of configuring the second data acquisition module 62.

In this way, some hardware components of the data acquisition module 62 (e.g.: the A/D conversion component 621) are prevented from acquiring other detection signals during the on-going sampling period Ts, whereas other hardware components of the data acquisition module 62 (e.g.: the counting component 622) are reset or re-configured to continue properly operating during the on-going sampling period Ts.

Preferably, the fourth data acquisition module 64 provides a disabling/resetting signal D (instant t₁₄ of figure 9) to the second data acquisition module 62 to configure this latter.

In a preferred variant, the processing procedure 640 comprises the step 646 of configuring the CPU such that it will be in an active mode after execution of the fourth data acquisition module 64.

The data acquisition arrangement 6 provides relevant advantages in managing the acquisition and storage of the input values D₁, D₂, D_{N} to be processed by the arc fault determination module 4.

The data acquisition arrangement 6 ensures that the input data D₁, D₂, D_{N} are acquired at predefine instants determined by the sampling period Ts adopted by the controller 3, which may be conveniently set to ensure a proper operation of the electronic protection device 1 independently from the amount of data to be processed by the arc fault determination module 4.

On the other hand, the data acquisition arrangement 6 ensures safe acquisition and storage of the input data D₁, D₂, D_{N} acquired at each sampling period Ts into the circular memory buffers BUF₁, BUF₂, BUF_{N}. In this way, the processing of the input data D₁, D₂, D_{N} for arc determination purposes can be managed independently from the occurring of the sampling instants (in other words the processing of the input data D₁, D₂, D_{N} for arc fault determination purposes does not need to be completed within each sampling period).

The data acquisition arrangement 6 thus ensures a proper processing of the input data D₁, D₂, D_{N} for arc determination purposes and, at the same time, allows relaxing the data processing and timing constraints required to the controller 3.

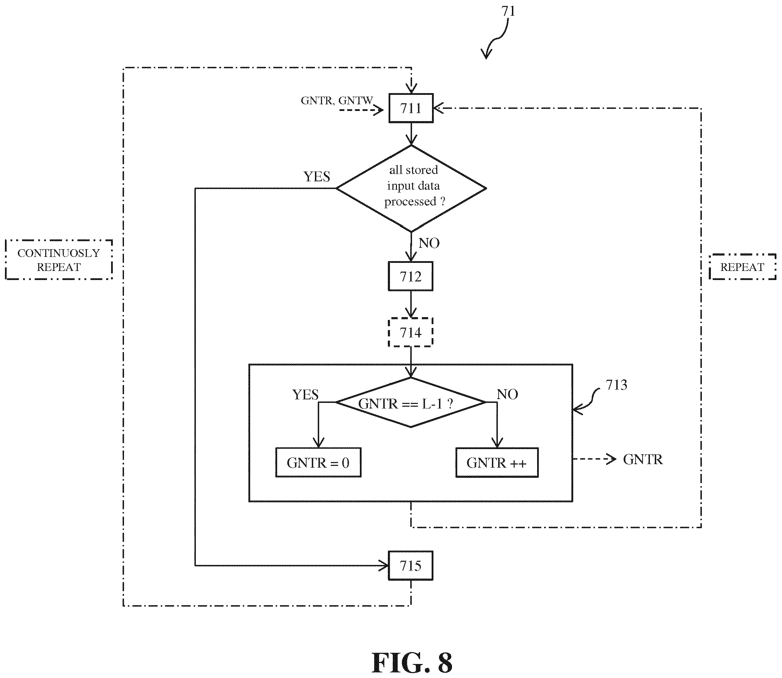

According to a preferred embodiment of the invention, the managing module 7 of the controller 3 is configured to cyclically check whether the circular memory buffers BUF₁, BUF₂, BUF_{N} store input values D₁, D₂, D_{N}, which have not yet been processed by the arc fault determination module 4. In this case, the managing module 7 activates the arc fault determination module 4 and possibly one or more additional data processing modules 5 of the controller 3. Otherwise, the managing module 7 activates one or more additional data processing modules 5 of the controller 3 or makes the CPU enter into a sleep mode. Preferably, the managing module 7 of the controller 3 is configured to execute a third data processing procedure 71 (figure 8), which is directed to manage the processing of the input values D₁, D₂, D_{N} stored in the circular memory buffers BUF₁, BUF₂, BUF_{N} by the arc fault determination module 4.

Preferably, the processing procedure 71 comprises a step 711 of checking whether all the input values D₁, D₂, D_{N} stored in the circular memory buffers BUF₁, BUF₂, BUF_{N} have been processed by the arc fault determination module 4.

Preferably, the above-mentioned checking step 711 comprises the comparing of the above mentioned first index variable GNTW with a second index variable GNTR, which is a variable pointing to the memory locations of the memory buffers BUF₁, BUF₂, BUF_{N} in which the input values D₁, D₂, D_{N} have to be read by the arc fault determination module 4, at a given sampling period Ts (figure 10).

If said comparison determines that the condition {GNTW=GNTR} is true, all the input values D₁, D₂, D_{N} stored in said circular memory buffers BUF₁, BUF₂, BUF_{N} have been processed by the arc fault determination module 4.

If said comparison determines that the condition {GNTW=GNTR} is false, some input values D₁, D₂, D_{N} stored in said circular memory buffers BUF₁, BUF₂, BUF_{N} have not been processed by the arc fault determination module 4 yet.

If some input values D₁, D₂, D_{N} stored in said circular memory buffers BUF₁, BUF₂, BUF_{N} have not been processed by the arc fault determination module 4 yet, the data processing procedure 71 comprises the step of activating 712 the arc fault determination module 4. When activated by the managing module 7, the arc fault determination module 4 acquires and processes a set of input values D₁, D₂, D_{N} from the circular memory buffers BUF₁, BUF₂, BUF_{N}. Each input value D₁, D₂, D_{N} is acquired by the arc fault determination module 4 in a corresponding memory buffer BUF₁, BUF₂, BUF_{N} at a memory location pointed by the second index variable GNTR.

The processing procedure 71 then comprises a step 713 of updating the second index variable GNTR in such a way this latter points to new subsequent memory locations of the memory buffers BUF₁, BUF₂, BUF_{N} to be read by the arc fault determination module 4, once these latter are newly activated by the managing module 7.

Preferably, the step 713 comprises the sub-step of comparing the second index variable GNTR with the above-mentioned predetermined index value L indicative of the length of the memory buffers BUF₁, BUF₂, BUF_{N}.

Preferably, the step 713 comprises the sub-step of setting the second index variable GNTR in the updating condition: {GNTW=0}, if the condition {GNTR=L-1} is true.

Preferably, the step 713 comprises the sub-step of setting the second index variable GNTR in the updating condition; {GNTR=GNTR+1}, if the condition {GNTR=L-1} is false.

In other words, in the step 713, similarly to the first index variable GNTW, if the second index variable GNTR currently points to the last memory location "L-1" of the memory buffers BUF₁, BUF₂, BUF_{N}, such a second index variable is updated in such a way to point to the first memory location "0" of the memory buffers BUF₁, BUF₂, BUF_{N}, thereby implementing a circular FIFO queue.

Otherwise, if the second index variable GNTR currently points to a memory location different from the last memory location "L-1" of the memory buffers BUF₁, BUF₂, BUF_{N}, such a second index variable is updated in such a way to point to the following memory location of the memory buffers BUF₁, BUF₂, BUF_{N} (as required by a FIFO queue).

In a preferred variant, following the activation of the arc fault determination module 4, the data processing procedure 71 comprises the step of activating 714 one or more additional data processing modules 5, if this is necessary to the operation of the controller 3.

Preferably, the data processing procedure 71 provides for repeating the above-mentioned checking step 711 after the steps 712, 713 and, possibly, 714 have been completed.

If some input values D₁, D₂, D_{N} stored in said circular memory buffers BUF₁, BUF₂, BUF_{N} have not been processed by the arc fault determination module 4 yet, the above mentioned steps 711, 712, 713 and, possibly, 714 are then cyclically repeated.

Instead, if all the input values D₁, D₂, D_{N} stored in the circular memory buffers BUF₁, BUF₂, BUF_{N} have been processed by the arc fault determination module 4, the data processing procedure 71 comprises the step 715 of activating one or more additional data processing modules 5 or makes the CPU 30 enter in a sleep mode.

Preferably, the third data processing procedure 71 is continuously repeated by the managing module 7 during runtime as a background process and is momentarily interrupted only by data acquisition modules 63 and 64, which are triggered by the hardware interrupts I₁ and I₂ respectively, at fixed time intervals, as shown in Figure 9.

Apparently, the time to execute one cycle of the data processing procedure 71 may greatly vary according to input data and selected tasks to be run. When input data or selected tasks require many computations, the execution time of corresponding cycle of procedure 71 may be longer than the sampling period Ts, thus increasing the queue of data to be processed in circular buffers BUF₁, BUF₂, BUF_{N}.

On the contrary, when input data or selected tasks require few computations, more than one cycle of the data processing procedure 71 may be executed during one sampling period Ts, thus reducing the queue of data to be processed in circular buffers BUF₁, BUF₂, BUF_{N}.

In practice, it has been found that the electronic protection device, according to the invention, fully achieves the intended aim and objects.

The electronic protection device 1, according to the invention, includes a controller 3 having a data acquisition arrangement 6 capable of providing a reliable and efficient storing and acquisition of the input values D₁, D₂, D_{N} to be processed for arc determination purposes. The data acquisition arrangement 6 allows the controller 3 to provide excellent and reliable arc fault determination performances.

The data acquisition arrangement 6 provides a remarkable relief to the timing and data processing constraints required to the controller 3 for operation.

The controller 3 can thus manage a number of data processing tasks concurrently with a high level of flexibility and without the need of high computational power levels.

The data acquisition arrangement 6 thus allows the controller 3 to provide performances similar to those ensured by higher level digital processing systems (e.g. embedding an operating system) at a relatively low cost with relevant advantages in terms of control of the overall industrial costs.

The electronic protection device has proven to be easy to industrially manufacture, at competitive costs with respect to currently available electronic protection devices.

## Claims

1. Electronic protection device (1) for a low voltage electric line (100), said protection device being provided with a control unit (2) having a controller (3) comprising a central processing unit (30) and an arc fault determination module (4) executable by said central processing unit and configured to implement arc detection functions (F1) to determine the presence of arc fault conditions in said electric line, said arc fault determination module being configured to process one or more input values (D₁, D₂, D_{N}) indicative of operating conditions of said electric line to implement said arc detection functions (F1), **characterised in that** said controller comprises a data acquisition arrangement (6) adapted to manage acquisition and storage of said input values (D₁, D₂, D_{N}), said data acquisition arrangement comprising:
- a memory (65) comprising one or more circular memory buffers (BUF₁, BUF₂, BUF_{N}) for temporary storing said input values (D₁, D₂, D_{N});
- a first data acquisition module (61) configured to provide a first interrupt signal (I₁) at subsequent time instants (t₁, t₂, t_{I}) separated by a fixed time period (Ts);
- a second data acquisition module (62) configured to acquire and process one or more detection signals (S₁, S₂, S_{M}) indicative of operating conditions of said electric line to obtain said input values (D₁, D₂, D_{N}), said second data acquisition module being configured to provide a second interrupt signal (I₂) when the obtaining of a set of said input values (D₁, D₂, D_{N}) is completed;
- a third data acquisition module (63) executable by said central processing unit (30) and activatable by said first interrupt signal (I₁), said third data acquisition module being configured to enable operation of said second data acquisition module (62) in response to said first interrupt signal (I₁);
- a fourth data acquisition module (64) executable by said central processing unit (30) and activatable by said second interrupt signal (I₂), said fourth data acquisition module being configured to acquire a set of input values (D₁, D₂, D_{N}) from said second data acquisition module (62) and store each acquired input value (D₁, D₂, D_{N}) in a corresponding memory buffer (BUF₁, BUF₂, BUF_{N}) of said buffer memory in response to said second interrupt signal (I₂).

2. Electronic protection device, according to claim 1, **characterised in that** said third data acquisition module (63) is configured to select one or more selectable detection signals (S₁, S₂) to be acquired by said second data acquisition module (62).

3. Electronic protection device, according to one or more of the previous claims, **characterised in that** said third data acquisition module (63) is configured to execute a first data processing procedure (630) comprising the step of enabling (631) said second data acquisition module (62) to acquire one or more detection signals (S₁, S₂, S_{M}) and obtain said input values (D₁, D₂, D_{N}) by processing said detection signals.

4. Electronic protection device, according to one or more of said previous claims, **characterised in that** said second data acquisition module (62) comprises an A/D conversion component (621) to execute an A/D conversion of one or more detection signals (S₁, S₂).

5. Electronic protection device, according to one or more of said previous claims, **characterised in that** said fourth data acquisition module (64) is configured to execute a second data processing procedure (640) including the following steps:
- acquiring (641) a set of input values (D₁, D₂, D_{N}) from said second data acquisition module (62);
- storing (642) each acquired input value (D₁, D₂, D_{N}) in a corresponding memory buffer (BUF₁, BUF₂, BUF_{N}) at a memory location pointed by a first index variable (GNTW);
- updating (643) said first index variable (GNTW).

6. Electronic protection device, according to claim 5, **characterised in that** said second data processing procedure (640) comprises the step of updating (644) one or more selection variables (CHADC) indicative of one or more selectable detection signals (S₁, S₂) to be acquired by said second data acquisition module (62).

7. Electronic protection device, according to one of the claims from 5 to 6, **characterised in that** said second data processing procedure (640) comprises the step of configuring (645) said second data acquisition module (62).

8. Electronic protection device, according to one or more of the previous claims, **characterised in that** said controller (3) comprises one or more additional data processing modules (5) executable by said central processing unit (30) and configured to implement further functions (F2) to control operation of said electronic protection device and a managing module (7) executable by said central processing unit (30) and configured to manage operation of said arc fault determination module (4) and said additional data processing modules (5).

9. Electronic protection device, according to claim 8, **characterised in that** said managing module (7) is configured to cyclically check whether said circular memory buffers (BUF₁, BUF₂, BUF_{N}) store input values (D₁, D₂, D_{N}) not processed by said arc fault determination module (4) and to activate said arc fault determination module (4) if said circular memory buffers (BUF₁, BUF₂, BUF_{N}) store input values (D₁, D₂, D_{N}) not processed by said arc fault determination module (4).

10. Electronic protection device, according to claim 9, **characterised in that** said managing module (7) is configured to execute a third data processing procedure (71) comprising the following steps:
- checking (711) whether said circular memory buffers (BUF₁, BUF₂, BUF_{N}) store some input values (D₁, D₂, D_{N}) not processed by said arc fault determination module (4);
- if said circular memory buffers (BUF₁, BUF₂, BUF_{N}) store input values (D₁, D₂, D_{N}) not processed by said arc fault determination module (4), activating (712) said arc fault determination module (4), said arc fault determination module acquiring and processing a set of input values (D₁, D₂, D_{N}) from said circular memory buffers when activated, each input value (D₁, D₂, D_{N}) being acquired by said arc fault determination module in a corresponding memory buffer (BUF₁, BUF₂, BUF_{N}) at a memory location pointed by a second index variable (GNTR);
- updating (713) said second index variable (GNTR);
- repeating the preceding steps;
- if said circular memory buffers (BUF₁, BUF₂, BUF_{N}) store input values (D₁, D₂, D_{N}) processed by said arc fault determination module (4) only, activating (715) one or more additional data processing modules (5) or make said central processing unit (30) enter in a sleep mode.

11. Electronic protection device, according to claim 10, **characterised in that** said third data processing procedure (71) comprises the step of activating (714) one or more additional data processing modules (5).

12. Electronic protection device, according to one of the claims from 10 to 11, **characterised in that** said third data processing procedure (71) is continuously repeated by said managing module (7).

13. Electronic protection device, according to one or more of the previous claims, **characterised in that** said fixed time period (Ts) is a sampling period adopted by said controller (3).
